# EUROPEAN PATENT APPLICATION

(11) **EP 1 113 057 A1**
(43) Date of publication of application: **04.07.2001**
(21) Application number: 00311138.2
(22) Date of filing: 13.12.2000
(51) Int. Cl.: C09D 11/02, B41M 1/12

(54) **Emulsion ink for stencil printing**

(30) Priority: 21.12.1999 JP 36280099
(71) Applicant: RISO KAGAKU CORPORATION, Tokyo (JP)
(72) Inventor: Okawa, Teruaki, Tokyo (JP)
(74) Representative: Jenkins, Peter David

(57) **Abstract**

Disclosed is a water in oil type emulsion ink used for stencil printing, rarely causing a strike through phenomenon, and being capable of providing an excellent printed images; the emulsion ink comprising an oil phase and a water phase, the lightness of the light transmitted through the oil phase in the range of visible light (380 to 800 nm) being 90.0 or higher in a condition that the oil phase does not include a component of coloring agent, and the ratio by weight of the oil phase to the water phase (oil phase/water phase) being 10 to 70/90 to 30.

## Description

The present invention relates to an emulsion ink for stencil printing. More specifically, the invention relates to a water in oil type emulsion ink used for stencil printing and rarely causing a strike through phenomenon.

In stencil printing, a master sheet is first perforated to prepare a stencil printing sheet, and then an ink is forced to pass through the perforations formed in the master sheet to print such a material to be printed as a paper. Particularly, a rotation type stencil printing machine has been employed in a wide field since it can print a large quantity of papers at a low printing cost, preparation of stencil printing sheet and printing process are automated, and operation is simple. For such stencil printing, an water in oil (W/O) type emulsion ink has been used as ink for stencil printing in general, and a pigment is used therein as coloring agent (Laid-open Japanese Patent Publication Nos. Sho 61-255967, Sho 64-14284, Hei 4-132777, Hei 7-188598, and Hei 10-81846).

However, in stencil printing using a W/O type emulsion ink, there were the problems that print density and definition are low and that a strike through phenomenon (a phenomenon in which a reversed printed image can be seen from the back through the paper) is ready to cause, since a large amount of printed ink is transferred and a part of ink components penetrates to the deep of paper compared with the case of offset printing.

An aim of the present invention is to solve the problems in the prior art described above. Another object of the present invention is to provide a water in oil type emulsion ink which is used for stencil printing, rarely causes a strike through phenomenon, and is capable of providing excellent printed images.

During the course of diligent researches by the present inventors on the problems described above, it was first found that when oil components other than a pigment, which is a component of coloring agent, are colored, a strike through phenomenon becomes ready to be conspicuous when the oil phase bleeds to the back of the paper due to penetration of the oil phase into the paper. As a result of continued researches based on the finding, it has now been found that the objects described above can be achieved by specifying the optical property of the oil phase in an ink and limiting the blending ratio of the oil phase.

The present invention is summarized as follows:
(1) A water in oil type emulsion ink for stencil printing comprising an oil phase and a water phase, the lightness of the light transmitted through the oil phase in the range of visible light (380 to 800 nm) being 90.0 or higher in a condition that the oil phase does not include a component of coloring agent, and the ratio by weight of the oil phase to the water phase (oil phase/water phase) being 10 to 70/90 to 30.
(2) The water in oil type emulsion ink for stencil printing recited in (1) above wherein a nonvolatile solvent, volatile solvent, and emulsifier are included in the oil phase.
(3) The water in oil type emulsion ink for stencil printing recited in (1) or (2) above wherein a pigment is included, as a component of coloring agent, in the oil phase and/or the water phase.
(4) The water in oil type emulsion ink for stencil printing recited in (3) above wherein a resin is further included in the oil phase when the oil phase includes a pigment.
(5) The water in oil type emulsion ink for stencil printing recited in (3) above wherein an oil in water type resin emulsion and/or a water-soluble resin is further included in the water phase when the water phase includes a pigment.
(6) The water in oil type emulsion ink for stencil printing recited in any one of (1) to (5) above wherein an extender is included in the oil phase and/or the water phase.
(7) The water in oil type emulsion ink for stencil printing recited in any one of (1) to (6) above wherein the ratio by weight of the oil phase to the water phase (oil phase/water phase) is 20 to 50/80 to 50.

Drying of a W/O type emulsion ink on printed images after stencil printing is performed through penetration of the emulsion ink into a printed paper and evaporation of a solvent. In the penetration of the emulsion ink into the printed paper, it is considered that the emulsion enters into voids between fibers in the printed paper, the emulsion separates into the oil phase and the water phase, and then, first, the oil phase and, subsequently, the water phase migrates along the fibers in the printed paper. At this time, whereas a coloring component such as a pigment contained in the oil phase tends to comparatively remain on the surface of the printed paper since its particle diameter is large, other components such as an active agent, solvent, and resin contained in the oil phase penetrate the printed paper more readily than a coloring component such as a pigment, and thus strike through becomes ready to be conspicuous when the components other than the component of coloring agent in the oil phase are colored.

With the W/O type emulsion ink of the present invention, penetration of the oil phase into a printed paper is small at the time of drying of an emulsion ink after stencil printing, bleeding of the components of the oil phase to the back of the printed paper is repressed, and the color of the oil phase components hardly becomes conspicuous even when the oil phase components bled to the back surface, because the optical property of the components contained in the oil phase excluding a component of coloring agent is restricted in terms of the lightness of the light transmitted through the oil phase, and the amount of the oil phase to be used, which readily penetrates into a printing paper, is specified in the range of 10 to 70 % by weight. Thus, the strike through phenomenon is avoided.

### BEST MODE FOR CARRYING OUT THE INVENTION

The ink of the present invention for stencil printing is a water in oil type emulsion ink comprising an oil phase and a water phase, and the lightness of the light which transmitted the oil phase in the range of visible light (380 to 800 nm) is 90.0 or higher in a condition that the oil phase does not contain a component of coloring agent. In the case where the lightness of the light which transmitted through the oil phase components excluding a component of coloring agent in the range of visible light (380 to 800 nm) is lower than 90.0, color of the oil phase components becomes ready to be conspicuous and the strike through phenomenon is caused when the oil phase components bled to the back of the printed paper at the time of drying the ink after stencil printing.

The term "lightness" as used in this specification means one of three psychological attributes (hue, lightness, and saturation) of color and also means the ratio of brightness of color. Bright color has a high lightness and a dark color has a low lightness. Specifically, the term "lightness" as used in this specification means a numerical value which is obtained from the results of spectra determination with an ultraviolet visible spectrophotometer by automatic calculation according to color calculation program.

In the emulsion ink of the present invention for stencil printing, the weight ratio of an oil phase to a water phase (oil phase/water phase) is 10 to 70/90 to 30 and preferably 20 to 50/80 to 50. Such emulsion ink can usually be produced by gradually adding 90 to 30 parts by weight of a water phase to 10 to 70 parts by weight of an oil phase and emulsifying the mixture.

Oil phase of the emulsion ink of the present invention usually contains a pigment, nonvolatile solvent, volatile solvent, and emulsifier, and further contains such a component as a resin, if necessary. In the present invention, a pigment can be included, as a component of coloring agent, in the oil phase and/or the water phase.

As the nonvolatile solvent, a mineral oil such as a motor oil, light oil, kerosene oil, spindle oil, machine oil, and liquid paraffin, and a vegetable oil such as an olive oil, rape oil, castor oil, salad oil, and soybean oil are used. As the volatile solvent, a known mineral oil type solvent and vegetable oil type solvent is used. While the blending ratio by weight of the nonvolatile solvent to the volatile solvent (nonvolatile solvent/volatile solvent) is varied according to the blending ratio of the oil phase to the water phase, it is preferably in the range of 50 to 95/5 to 50.

Emulsifier included in the oil phase is used to form a water in oil type (W/O) emulsion. While any one of anionic surface active agents, cationic surface active agents, ampholytic surface active agents, and nonionic surface active agents can be used as the emulsifier, particularly a nonionic surface active agent is preferable. For instance, a sorbitan fatty acid ester such as sorbitan monolaurate, sorbitan monopalmitate, sorbitan monooleate, sorbitan sesquioleate, and sorbitan monoisostearate, a (poly)glycerin fatty acid ester such as glyceryl monostearate, hexaglyceryl tetraoleate, decaglyceryl decaoleate, and hexaglyceryl pentaoleate, a polyoxyethylene sorbitan fatty acid ester, a polyoxyethylene glycerin fatty acid ester, a polyoxyethylene sorbit fatty acid ester, a propyleneglycol fatty acid ester, a (poly)ethyleneglycol fatty acid ester, a polyoxyethylene alkyl ether, a polyoxyethylene polyoxypropylene alkyl ether, a polyoxyethylene alkyl phenyl ether, or a polyoxyethylene(cured) castor oil is used. These surface active agents can be used singly or in combination of two or more. Further, as described below, when a water-insoluble coloring agent such as a pigment or an oil in water (O/W) type resin emulsion is included in the water phase, a surface active agent is used even in the water phase, and thus it is preferable to select a proper emulsifier from the ones described above so that W/O type emulsion is not destroyed by an interaction with the surface active agent used in the water phase.

As coloring agent, known pigments having various color tones are used, and these pigments can be included in the oil phase and/or the water phase. As component of coloring agent, for example, metals such as cobalt, iron, chrome, copper, zinc, lead, titanium, vanadium, manganese, and nickel, metal oxides, metal sulfides, carbon blacks such as furnace carbon black, lamp black, and channel black, inorganic pigments such as ocher, ultramarine blue, and prussian blue in addition to organic pigments such as azo type, phthalocyanine type, dye type, condensed polycyclic type, nitro type, and nitroso type (Brilliant Carmine 6B, Lake Red C, Watching Red, Disazo Yellow, Hansa Yellow, Phthalocyanine Blue, Phthalocyanine Green, Alkali Blue, and Aniline Black) are used.

When a component of coloring agent is contained in the oil phase, a resin is preferably added as a component of the oil phase to secure fixing of an ink on a paper. As component of the resin, for example, a phenolic resin, maleic resin, petroleum resin, and alkyd resin is used.

In the water phase of the emulsion ink of the present invention, usually, for example, one or more water-soluble additives such as a wetting agent, oil in water (O/W) type resin emulsion, water-soluble resin, electrolyte, mildewproofing agent, antiseptic agent, anti-oxidizing agent, antifreezing agent, and pH adjuster are included, when necessary, in addition to water.

When a pigment is included in the water phase as a component of the coloring agent, an O/W type resin emulsion and/or a water-soluble resin is further added thereto, when desired. By including the resin component in the water phase, dispersibility of the coloring agent and fixing ability of the coloring agent to a material to be printed are increased. When a pigment is included in the water phase, a resin may be added in the oil phase.

As the O/W type resin, an emulsion of, for example, polyvinyl acetate, ethylene-vinyl acetate copolymer, vinyl acetate-acrylate copolymer, polymethacrylate, polystyrene, styrene-acrylate copolymer, styrene-butadiene copolymer, vinylidene chloride-acrylate copolymer, polyvinyl chloride, vinyl chloride-vinyl acetate copolymer, and polyurethane is used.

As the water-soluble resin, for example, a polyvinyl alcohol, methyl cellulose, carboxymethyl cellulose, hydroxyethyl cellulose, polyvinyl pyrrolidone, ethylene-vinyl alcohol copolymer, polyethylene oxide, polyvinyl ether, polyacrylamide, gum arabic, starch, and water-soluble polyurethane is used.

Amount of the O/W type resin emulsion and/or water-soluble resin to be added is preferably 1 to 20 % by weight and more desirably 2 to 10 % by weight, on a solid base, based on the total amount of emulsion ink. When the amount is less than 1 % by weight, it is difficult to obtain an excellent dispersibility of the coloring agent in the water phase or an excellent fixing ability of the coloring agent to the material to be printed. Conversely, in the case where the amount exceeds 20 % by weight, an ink forms a film at perforated portions of a stencil printing sheet when the sheet was left standing for long period of time in a condition that the ink adhered on the sheet, and thus passage of the ink is sometimes obstructed.

In order to improve wettability or dispersibility of a component of coloring agent to the water phase, it is preferable to add, as a dispersing agent, an anionic surface active agent, cationic surface active agent, ampholytic surface active agent, nonionic surface active agent, high polymer type, silicone type, or fluorine type surface active agent, tertiary amine compound described in Laid-open Japanese Patent Publication No. Hei 8-34944, or water-soluble polymer containing an acid anhydride described in Laid-open Japanese Patent Publication No. Hei 10-1634 to the water phase.

Extender may be included in the oil phase and/or the water phase of the W/O type emulsion ink of the present invention. Extender does not penetrate the inside of such a material to be printed as a printing paper, remains on its surface to act so as to hold many components of the coloring agent on the surface of the material to be printed, prevents the reduction of print density after ink drying, and serves so as to avoid the strike through. In the case where the extender is included in the water phase, it becomes possible to fill the depressions on the surface of the material to be printed by the extender in the ink components even when such depressions existed. Thus, printing in a glossy tone becomes possible and printed images of stabilized qualities can be obtained even when a full color printing is conducted.

Amount of the extender to be added is preferably 1 to 50 % by weight and more desirably 5 to 20 % by weight based on the total amount of emulsion ink. When the amount to be added is less than 1 % by weight, increase in printing density, and an effect to prevent the strike through and bleeding are sometimes not obtained. Conversely, when the amount to be added exceeds 50 % by weight, increase in printing density, and an effect to prevent the strike through and bleeding are obtained, but an ink to be produced sometimes becomes an ink which is difficult to pass through the perforations of a stencil printing sheet and thus unsuitable for stencil printing. Average particle diameter of the extender is not specifically limited so far as it is in a range wherein the emulsion of an ink is not destroyed by the presence of the extender.

Type of the extender is not specifically limited so far as it is composed of water-insoluble fine particles. For example, known inorganic fine particles such as those of china clay, talc, clay, diatomaceous earth, calcium carbonate, barium sulfate, titanium oxide, alumina white, silica, kaolin, mica, and aluminum hydroxide, and known organic fine particles such as those of polyacrylic ester, polyurethane, polyester, polyethylene, polypropylene, polyvinyl chloride, polyvinylidene chloride, polystyrene, polysiloxane, phenolic resin, epoxy resin, and benzoguanamin resin, and their copolymers can be used as extender.

### Example

Now, the present invention will be described in more detail with reference to Examples and Comparative Examples. However, it should be understood that the scope of the present invention is by no means restricted by such specific examples. In the following examples, the lightness and print through were determined and evaluated by the following methods:
(1) Lightness (L*): A solution of the components of an oil phase in an emulsion ink excluding a pigment was prepared. This solution was subjected to a spectrum measurement by using an ultraviolet visible spectrophotometer type V-530 (produced by JASCO CORPORATION, and the lightness was automatically calculated from the result of the measurement by using Spectral Manager for windows type VWTS-581 Color Calculation Program (produced by JASCO CORPORATION).
(2) Strike through: Stencil printing was performed on a paper by using a sample ink with a stencil printing machine, Risograph GR 375 (produced by RISO KAGAKU CORPORATION), and the back of the paper on the front surface of which images were printed was visually inspected, and the printed paper was evaluated as follows:
   - ○ :: Almost no strike through was observed.
   - △ :: While some extent of strike through was observed, it was at a level having no problem in practical use.
   - X :: Strike through was conspicuously observed and it has a problem in practical use.

### Example 1

A W/O type emulsion ink was prepared in the formulation shown in Table 1 using the following method:

First, a carbon black, alkyd resin, sunthene 4240, AF-4, ED-8 were mixed and sufficiently stirred. Subsequently, sorbitan sesquioleate was added thereto and further sufficiently stirred to obtain an oil phase. This oil phase was emulsified by stirring while gradually adding thereto a deionized water in which ethylene glycol and magnesium sulfate were sufficiently dissolved to obtain an emulsion ink for stencil printing. By using the emulsion ink, stencil printing was conducted, and the extent of strike through was evaluated through a visual inspection. Result thus obtained is shown in Table 2.

In a separate step, a solution having the same formulation as that of the oil phase shown in Table 1 with the exception that the pigment was omitted was prepared, and the lightness with this solution was determined. The result thus obtained is also shown in Table 2.

### Examples 2 to 3 and Comparative Examples 1 to 2

Four kind of emulsion inks for stencil printing were prepared by the same method as in Example 1 with the exception that the formulation of the ink was changed as shown in Table 1, respectively. By using these emulsion inks, stencil printing was conducted, and the extent of strike through was evaluated through a visual inspection. Also, the lightness with respect to the four solutions of the oil phase components shown in Table 1 excluding the pigment was determined. Results thus obtained are also shown in Table 2.

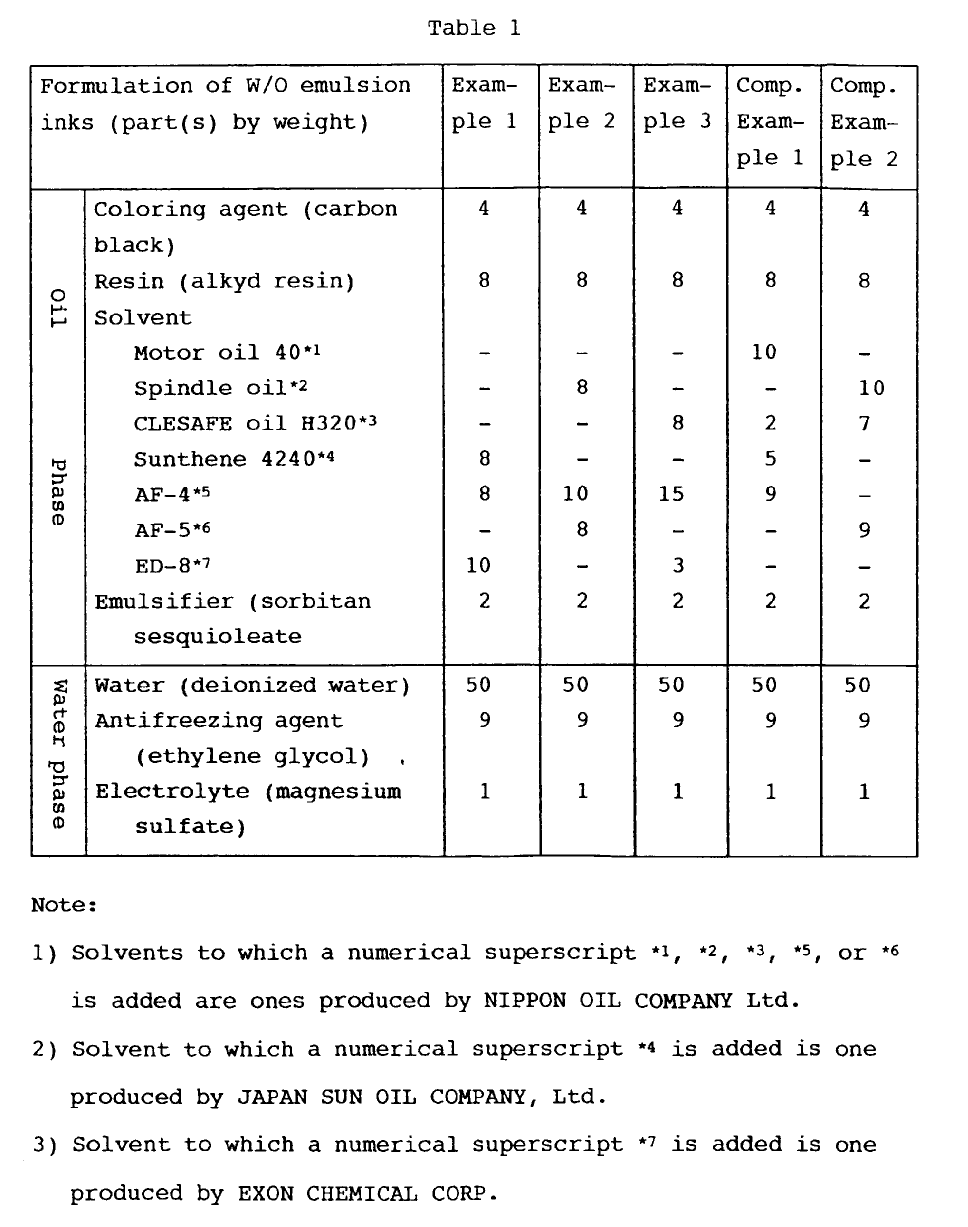

**Table 2**

| | Example 1 | Example Example 2 3 | | Comp. Example 1 | Comp. Example 2 |
|---|---|---|---|---|---|
| Strike through (visual inspection) | ○ | ○ | ○ | × | △ |
| Lightness (L*) | 91.7 | 93.4 | 90.2 | 61.8 | 89.4 |

From Table 2, it can be understood that with the emulsion ink of the present invention (Examples 1 to 3), the lightness is 90.0 or higher and the strike through phenomenon is suppressed.

Since the emulsion ink of the present invention for stencil printing gives a high lightness of the light transmitted through the components of oil phase in the ink other than a component of coloring agent, strike through becomes inconspicuous even when the ink transferred to a printing paper and ink components bled to the back of the paper, and thus excellent printed images with which the strike through phenomenon is suppressed can be obtained.

## Claims

1. A water in oil type emulsion ink for stencil printing comprising an oil phase and a water phase, the lightness of the light transmitted through the oil phase in the range of visible light (380 to 800 nm) being 90.0 or higher in a condition that the oil phase does not include a component of coloring agent, and the ratio by weight of the oil phase to the water phase (oil phase/water phase) being 10 to 70/90 to 30.

2. The water in oil type emulsion ink for stencil printing according to claim 1 wherein a nonvolatile solvent, volatile solvent, and emulsifier are included in the oil phase.

3. The water in oil type emulsion ink for stencil printing according to claim 1 or 2 wherein a pigment is included, as a component of coloring agent, in the oil phase and/or the water phase.

4. The water in oil type emulsion ink for stencil printing according to claim 3 wherein a resin is further included in the oil phase when the oil phase includes a pigment.

5. The water in oil type emulsion ink for stencil printing according to claim 3 wherein an oil in water type resin emulsion and/or a water-soluble resin is further included in the water phase when the water phase includes a pigment.

6. The water in oil type emulsion ink for stencil printing according to any one of claims 1 to 5 wherein an extender is included in the oil phase and/or the water phase.

7. The water in oil type emulsion ink for stencil printing according to any one of claims 1 to 6 wherein the ratio by weight of the oil phase to the water phase (oil phase/water phase) is 20 to 50/80 to 50.
